# EUROPÄISCHE PATENTSCHRIFT

(11) **EP 0 901 314 B1**
(45) Veröffentlichungstag und Bekanntmachung des Hinweises auf die Patenterteilung: **19.12.2001**
(21) Anmeldenummer: 98116518.6
(22) Anmeldetag: 01.09.1998
(51) Int. Cl.: H05B 41/00

(54) **Steuergerät zum Betrieb und zur Steuerung von Gasentladungslampen in Scheinwerfern**
Control apparatus for operating and controlling a gas discharge lamp in headlamps
Dispositif de réglage pour l'opération et la commande des lampes à décharge de phare

(30) Priorität: 05.09.1997 DE 19738851
(43) Veröffentlichungstag der Anmeldung: 10.03.1999
(73) Patentinhaber: ROBERT BOSCH GMBH, 70442 Stuttgart (DE)
(72) Erfinder: Gorille, Ingo, 71739 Oberrixingen (DE); Kormanyos, Chris, 72764 Reutlingen (DE)

(56) Entgegenhaltungen:
- US-A- 4 613 791
- US-A- 4 728 861
- PATENT ABSTRACTS OF JAPAN vol. 014, no. 157 (M-0955), 27. März 1990 & JP 02 018128 A (NIPPON DENSO CO LTD), 22. Januar 1990

## Beschreibung

### Stand der Technik

Die Erfindung geht aus von einem Steuergerät zum Betrieb und zur Steuerung von Gasentladungslampen, insbesondere Hochdruck-Gasentladungslampen, die in Scheinwerfer, vorzugsweise von Kraftfahrzeugen, eingebaut sind, gemäß der im Oberbegriff des Anspruchs 1 definierten Gattung.

Bei einem in der Praxis bekannten Steuergerät dieser Art zum Betrieb und zur Steuerung von Gasentladungslampen ist in dem Steuergerät als Kern ein Mikrokontroller vorgesehen, durch welchen alle Funktionen der Lampe gesteuert und geregelt werden. Bei heute auf dem Markt befindlichen Kraftfahrzeugscheinwerfern dieser Art kann zusätzlich eine selbsttätige Leuchtweitenregelung vorgesehen sein, durch welche die Einstellung des Scheinwerfers gegenüber der Straße geregelt wird. Diese ist vom Steuergerät der Gasentladungslampe vollständig unabhängig und mit entsprechendem Aufwand an Schaltungselementen und damit einhergehenden Kosten verbunden.

Aus der DE 41 15 409 A1 ist eine Vorrichtung zum Betreiben einer Gasentladungslampe, insbesondere Hochdruck-Gasentladungslampe, bekannt, die auch in Scheinwerfer von Kraftfahrzeugen eingebaut sind. Diese Vorrichtung enthält keinen Mikroprozessor.

Aus der DE 196 28 405 A1 ist ein System für eine selbsttätige Leuchtweitenregelung eines Scheinwerfers bekannt, bei dem zur Realisierung der sehr spezifischen Schaltung ein Mikroprozessor verwendet werden kann.

Aus der DE 41 05 716 A1 ist eine automatische Leuchtweitenregelung für Kraftfahrzueg-Scheinwerfer bekannt, bei der die Regelung während der Fahrt abgeschaltet ist und nur bei stehendem Fahrzeug aktiviert wird.

Keines der genannten Dokumente enthält einen ganz allgemeinen Hinweis darauf, die Steuerung der Gasentladungslampe mit der Steuerung der Leuchtweitenregelung zu vereinigen, noch den speziellen Hinweis darauf, dies unter Einsatz eines Mikrokontrollers vorzunehmen. Es fehlt auch der Hinweis auf das Bedürfnis, dies zu tun.

### Vorteile der Erfindung

Das erfindungsgemäße Steuergerät mit den kennzeichnenden Merkmalen des Anspruchs 1, hat demgegenüber den entscheidenden Vorteil, daß eine erhebliche Reduzierung der Kosten des Gesamtsystems zu erreichen ist.

Gemäß der Erfindung ist prinzipiell das Steuergerät zum Betrieb und zur Steuerung von Gasentladungslampen mit einem Mikrokontroller ausgestattet, und es ist vorgesehen, daß dem Mikrokontroller, neben den für den Betrieb und die Steuerung im System der Gasentladungslampe erforderlichen Signalen, auch Sensorsignale in einem System für eine selbsttätige Leuchtweitenregelung des Scheinwerfers zugeführt werden, und daß der Mikrokontroller derart gestaltet ist, daß er diese Signale beider Systeme verschachtelt und/oder gegebenenfalls in Unterbrechungs-Behandlung verarbeitet, wobei die Laufzeit des Mikrokontrollers unter mehreren Funktionen aufgeteilt ist, insbesondere Zünden und Betrieb im System der Gasentladungslampe sowie Sollwertvorgabe im System der selbsttätigen Leuchtweitenregelung.

Durch die in den weiteren Ansprüchen niedergelegten Maßnahmen sind vorteilhafte Weiterbildungen und Verbesserungen des im Anspruch 1 angegebenen Steuergerätes zum Betrieb und zur Steuerung von Gasentladungslampen in Scheinwerfern möglich.

Gemäß einer ersten besonders vorteilhaften Ausführungsform des erfindungsgemäßen Steuergerätes ist die selbsttätige Leuchtweitenregelung eine statische Leuchtweitenregelung, bei welcher der Sollwert in relativ großen Zeitabständen aktualisiert wird, beispielsweise nur bei Be- oder Entladung des Kraftfahrzeuges. Bei dieser Ausführungsform der selbsttätigen statischen Leuchtweitenregelung ist in vorteilhafter Ausgestaltung ein Gleichstrommotor vorgesehen.

Gemäß einer zweiten besonders vorteilhaften Ausführungsform des erfindungsgemäßen Steuergerätes ist die selbsttätige Leuchtweitenregelung eine dynamische Leuchtweitenregelung, bei welcher der Sollwert in relativ kleinen Zeitabständen aktualisiert wird, beispielsweise bei Brems- und Beschleunigungsvorgängen des Kraftfahrzeuges. Bei dieser Ausführungsform der selbsttätigen dynamischen Leuchtweitenregelung ist in vorteilhafter Ausgestaltung ein Schrittmotor vorgesehen. Es hat sich als vorteilhaft erwiesen, für den Schrittmotor eine Treiberschaltung vorzusehen. Diese kann zum einem in einem dynamischen Leuchtweitenregelungsmodul oder gegebenenfalls auch im Steuergerät selbst integriert sein.

In weiterer zweckmäßiger Ausgestaltung des erfindungsgemäßen Steuergerätes werden vom Mikrokontroller zeitkritische Funktionen in beiden Systemen durch Subroutinen gesteuert, die durch Unterbrechungszyklen aufgerufen werden, und/oder weniger zeitkritische Funktionen und Entscheidungen werden in beiden Systemen in nach Zeit oder Aufgaben verschachtelter Betriebsweise getroffen.

Gemäß einer besonders zweckmäßigen Ausgestaltung der Erfindung ist als Mikrokontroller ein auf RISC-Basis aufgebauter Mikrokontroller vorgesehen, bei welchem zur Steuerung ein reduzierter Satz von Instruktionen zur Anwendung kommt. In vorteilhafter Weiterbildung dieser Ausgestaltung ist der Mikrokontroller mit einem Nur-Lese-bzw. Festspeicher (ROM-Speicher), typischerweise von einigen zig kilobytes, einem Speicher mit wahlfreiem Zugriff (RAM-Speicher), insbesondere von etwa 1 kilobyte, und einem elektronisch lösch-und programmierbaren Speicher (EEPROM-Speicher), insbesondere von etwa 1 kilobyte, versehen.

In weiterer Ausgestaltung der Erfindung hat es sich als vorteilhaft erwiesen, daß der Mikrokontroller mit einem elektrisch löschbaren und wiederbeschreibbaren Speicher (EEPROM-Speicher) für den Programmteil versehen ist, welcher typischerweise die Größe von einigen zig kilobytes aufweist, oder daß er mit einem Flash-Speicher, bei dem einzelne Speicherbereiche selektiv löschbar und wieder neu beschreibbar sind, ausgestattet ist.

In besonders zweckmäßiger Ausgestaltung ist der Mikrokontroller mit einem Analog-Digital-Wandler und einem Multifunktionstimer versehen. Entsprechend einer anderen vorteilhaften Weiterbildung ist im Mikrokontroller neben der Funktions-Software zusätzlich ein Programm vorgesehen, mit dessen Hilfe die Diagnosefunktionen für die Werkstatt übernommen bzw. durchgeführt werden.

Gemäß einer besonders vorteilhaften Ausgestaltung des erfindungsgemäßen Steuergerätes ist ein anwendungsspezifischer integrierter Schaltkreis, ein sogenannter ASIC, vorgesehen, welcher für beide Systeme adaptiert ist. Dadurch läßt sich in sehr kostengünstiger Weise mit nur einem Baustein in beiden Systemen die Anpassung und Umwandlung von logischen in elektrische Steuersignale und umgekehrt bewerkstelligen.

### Zeichnung

Die Erfindung ist anhand von in der Zeichnung dargestellter Ausführungsbeispiele in der nachfolgenden Beschreibung näher erläutert. Es zeigen:
- Fig. 1: schematisch ein Blockschaltbild des erfindungsgemäß gestalteten Steuergerätes mit statischer selbsttätiger Leuchtweitenregelung, und
- Fig. 2: schematisch ein Blockschaltbild des erfindungsgemäß gestalteten Steuergerätes mit dynamischer selbsttätiger Leuchtweitenregelung.

### Beschreibung der Ausführungsbeispiele

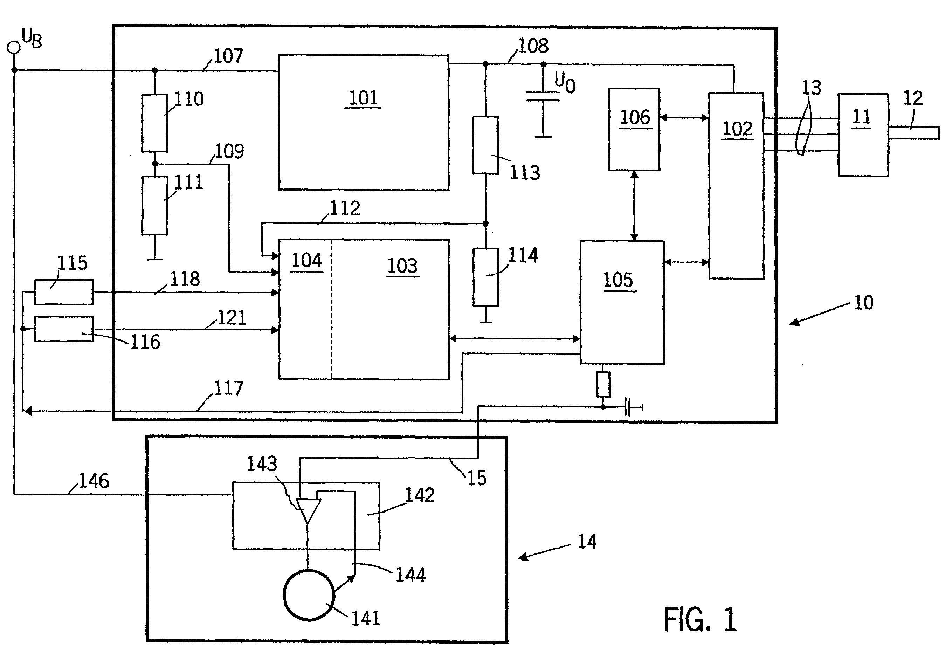

In Fig. 1 ist ein erstes Ausführungsbeispiel der Erfindung dargestellt. Dieses betrifft ein Steuergerät mit statischer selbsttätiger bzw. automatischer Leuchtweitenregelung. Bei der statischen Leuchtweitenregelung wird der Sollwert nur in relativ großen Zeitabständen aktualisiert, beispielsweise jeweils beim Be-oder Entladen des Kraftfahrzeuges bzw. beim Ein- oder Aussteigen. Wenn diese Voraussetzungen bei der Fahrt nicht geändert werden, ändert sich auch der vorgegebene Sollwert für die Leuchtweitenregelung nicht.

Ein Steuergerät 10 versorgt ein Zündmodul 11, an dem eine Hochdruck-Gasentladungslampe 12 angeschlossen ist, über drei Leitungen 13 mit Energie. Ein Leuchtweitenregelungsmodul 14 steht mit dem Steuergerät 10 über eine Leitung 15 in Signalaustausch. Über diese Leitung 15 wird dem Leuchtweitenregelungsmodul 14 der Sollwert vorgegeben.

Im Leuchtweitenregelungsmodul 14, welches der automatischen statischen Leuchtweitenregelung dient, sind als wesentliche Bauteile ein Gleichstrommotor 141 und ein integrierter Schaltkreis 142 vorgesehen. Der integrierte Schaltkreis 142 vergleicht in einem Vergleicher 143 den Sollwert auf Leitung 15 mit dem auf einer Leitung 144 angezeigten Istwert der Stellung des Gleichstrommotors 141 und versorgt diesen mit Antriebsenergie. Der Gleichstrommotor 141 seinerseits ist mit der Leuchte, insbesondere dem Scheinwerfer eines Kraftfahrzeuges verbunden, um die geforderte Leuchtweite durch Verstellung des Scheinwerfers in Relation zur Fahrzeugachse einzustellen. Der integrierte Schaltkreis 142 und damit auch das Leuchtweitenregelungsmodul 14 wird über eine Leitung 146 mit Versorgungsspannung, insbesondere der Bord- oder Batteriespannung U_{B} eines Kraftfahrzeuges, versorgt. Der Gleichstrommotor 141 hat einen relativ geringen Energiebedarf, da er bei einem Strombedarf im Bereich von 10 - 100 mA nur bei wesentlichen Belastungsänderungen eingeschaltet wird.

Das Steuergerät 10 enthält als wesentliche Bauteile einen Gleichstrom-Gleichstrom-Wandler 101, eine Brückenschaltung 102, einen Mikrokontroller 103 mit einem Analog-Digital-Wandler 104, eine anwendungsspezifische integrierte Schaltung 105, ein sogenannter ASIC, welcher für beide Systeme adaptiert ist, und eine Bootstrap-Schaltung 106, welche die "High-side-Transistoren" der Brückenschaltung 102 elektrisch richtig ansteuert. Da die Versorgungsspannung U₀ der Brückenschaltung 102 im Betrieb typischer Weise etwa 100 Volt beträgt, die Ansteuerung vom ASIC 105 aber nur mit U_{B} bzw. 5 V erfolgen kann und als Brückentransistoren aus Gründen des Aufwandes typischerweise kostengünstige n-Kanal-MOSFET Transistoren eingesetzt werden, die zu ihrer Durchsteuerung einen Ansteuerpegel benötigen, welcher größer als U₀ ist, ist die sogenannte Bootstrap-Schaltung 106 vorgesehen, um das im ASIC 105 generierte Ansteuersignal von U_{B} auf einen Spannungswert zu konvertieren, der größer als U₀ ist.

Der Gleichstrom-Gleichstrom-Wandler 101 erzeugt aus der auf einer Leitung 107 anstehenden Versorgungsspannung, insbesondere der Bord- oder Batteriespannung U_{B} eines Kraftfahrzeuges, eine Gleichspannung U₀, welche größer als die Spannung U_{B} ist und die der Brückenschaltung 102 als Eingangsspannung auf einer Leitung 108 zugeführt wird. Der Analog-Digital-Wandler 104 des Mikrokontrollers 103 wird über eine Anzapfleitung 109 eines ersten Spannungsteilers mit den Widerständen 110 und 111 über den Wert der Eingangsspannung U_{B} des Gleichstrom-Gleichstrom-Wandlers 101 informiert. Gleichfalls wird er über eine Anzapfleitung 112 eines zweiten Spannungsteilers mit den Widerständen 113 und 114 über den Wert der Ausgangsspannung U₀ des Gleichstrom-Gleichstrom-Wandlers 101 informiert.

Gemäß der Erfindung werden dem Mikrokontroller 103 Sensorsignale in einem System für eine selbsttätige Leuchtweitenregelung des Scheinwerfers zugeführt. Dies erfolgt neben der Zuführung der für den Betrieb und die Steuerung im System der Gasentladungslampe erforderlichen Signale. Im System der Leuchtweitenregelung sind Sensoren 115 und 116 vorgesehen, welche die Stellung der Fahrzeugachse in Relation zur Fahrbahn angeben. Diese Sensoren 115 und 116 stellen dazu insbesondere die jeweilige Stellung der Vorder- und Hinterachse des Kraftfahrzeugs in Relation zur Fahrzeugkarosserie fest und damit die Neigung der Fahrzeugachse in Bezug auf die Fahrbahn. Im dargestellten Beispiel werden die beiden Sensoren 115 und 116 von der anwendungsspezifischen integrierten Schaltung 105 über eine Leitung 117 versorgt, beispielsweise mit eine Spannung von 5 Volt. Das Ausgangssignal des Sensors 115 wird über eine Leitung 118 auf den Eingang des Mikrokontrollers 103, den Analog-Digital-Wandler 104, geführt. In gleicher Weise wird das Ausgangssignal des Sensors 116 über eine Leitung 121 auf den Eingang des Mikrokontrollers 103, den Analog-Digital-Wandler 104, geführt. Aus den Signalen der Sensoren 115 und 116 erarbeitet der Mikrokontroller 103 den Sollwert für die Verstellung des Gleichstrommotors 141 in relativ großen Zeitabständen, insbesondere jedoch bei den Ein- und Aussteigsowie den Be- und Entladevorgängen.

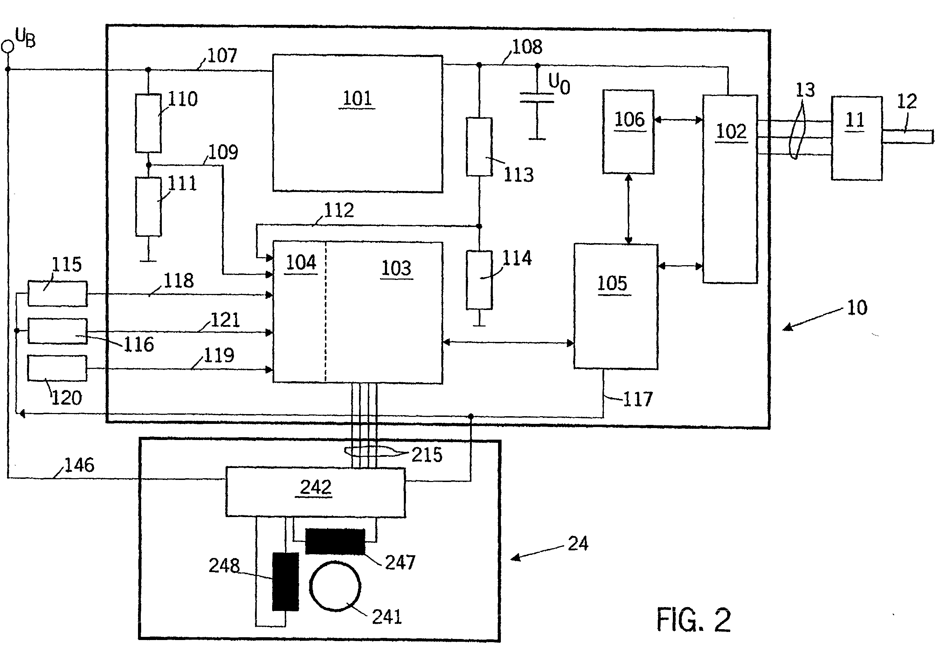

In Fig. 2 ist ein zweites Ausführungsbeispiel der Erfindung dargestellt. Dieses betrifft ein Steuergerät mit dynamischer selbsttätiger bzw. automatischer Leuchtweitenregelung. Bei der dynamischen Leuchtweitenregelung wird der Sollwert in relativ kleinen Zeitabständen aktualisiert, beispielsweise nicht nur jeweils beim Be- oder Entladen des Kraftfahrzeuges bzw. beim Ein-oder Aussteigen, sondern auch bei insbesondere starken Brems- und Beschleunigungsvorgängen. Sobald sich also bei der Fahrt die Relation zwischen der Fahrzeugachse und der Fahrbahn ändert, wird auch der vorgegebene Sollwert für die Leuchtweitenregelung geändert. Somit ergeben sich hier Sollwertänderungen in kürzeren Zeitabständen. Von einem Geschwindigkeitssignalgeber 120 wird dem Mikrokontroller 103 ein Tachosignal zugeführt. Im dargestellten Beispiel eines analogen Signals erfolgt die Zuführung über eine Leitung 119 zum Analog-Digital-Wandler 104. Das Tachosignal kann vom Mikrokontroller 103 in digitaler oder analoger Form verarbeitet werden, je nach Verfügbarkeit im Kraftfahrzeug. Liegt das Tachosignal analog vor, wird es sinnvollerweise wie dargestellt über den Analog-Digital-Wandler 104 zugeführt. Liegt das Tachosignal in digitaler Form vor, geht es sinnvollerweise über einen Multifunktionstimer dem Mikrokontroller 103 zu.

Damit diese Dynamik auch in schneller Nachführung der Leuchte, insbesondere dem Kraftfahrzeugscheinwerfer, realisiert werden kann, ist bei dieser Ausführungsform der Erfindung das Leuchtweitenregelungsmodul 24 mit einem Schrittmotor 241 ausgestattet, der wesentlich kräftiger ist als der Gleichstrommotor 141. Die Stromaufnahme dieses Schrittmotors kann beispielsweise im Bereich von 1 A liegen bei Versorgung durch die Bordspannung von ca. 12 Volt.

Bei dem in Fig. 2 dargestellten Ausführungsbeispiel sind für die bereits im Zusammenhang mit Fig. 1, insbesondere die Steuerschaltung 10 betreffenden Teile, verwendeten Bezugszeichen die gleichen und daher im Zusammenhang mit Fig. 2 nicht mehr im Einzelnen beschrieben. Es wird insoweit auf die zugehörige obige Beschreibung bei Fig. 1 verwiesen.

Im Leuchtweitenregelungsmodul 24, welches der automatischen dynamischen Leuchtweitenregelung dient, sind als wesentliche Bauteile der bereits genannte Schrittmotor 241 und eine Treiberschaltung 242 vorgesehen. Die Treiberschaltung 242 steht über eine Leitungsverbindung 215 mit dem Mikrokontroller 103 im Datenaustausch und erhält darüber die Steuerungsvorgaben für die beiden Wicklungen 247 und 248 des Schrittmotors 242. Mit Hilfe der auf Leitung 117 zugeführten Hilfsspannung von beispielsweise 5 V und der auf Leitung 146 anstehenden Versorgungsspannung, insbesondere der Bord- oder Batteriespannung U_{B} eines Kraftfahrzeuges, versorgt die Treiberschaltung 242 den Schrittmotor 241 mit der notwendigen Antriebsenergie zum gewünschten Zeitpunkt. Der Schrittmotor 241 seinerseits ist mit der Leuchte, insbesondere dem Reflektor des Scheinwerfers eines Kraftfahrzeuges verbunden, um die Leuchtweite beeinflussen zu können. Der Schrittmotor 241 nimmt eine relativ hohe Leistung auf, weil er jede größere Karosseriebewegung in eine Reflektoränderung umsetzen muß, damit die Hell-Dunkel-Grenze auch im dynamischen Fall konstant bleibt und der Gegenverkehr nicht geblendet wird.

Die Verbindung zwischen der Treiberschaltung 242 und dem Mikrokontroller 103 über die Leitungsverbindung 215 kann über eine der bekannten seriellen Kommunikationsverbindungen, die zwischen digitalen Einheiten als Standard üblich sind, realisiert werden. Als Beispiel sei Mikrowire/SPI genannt.

Entsprechend einer nicht dargestellten Ausführungsform kann die Treiberschaltung 242 auch in das Steuergerät 10 selbst mit eingebaut sein und dort mit der notwendigen Energie versorgt werden.

Der Mikrokontroller 103 ist derart gestaltet, daß er die Signale, die ihm von beiden Systemen, also der Leuchtweitenregelung und der Steuerung für die Hochdruck-Gasentladungslampe, verschachtelt und/oder gegebenenfalls in Unterbrechungs-Behandlung verarbeitet. Die Laufzeit des Mikrokontrollers 103 ist unter mehreren Funktionen aufgeteilt. Dazu gehören insbesondere das Zünden und der Betrieb im System der Gasentladungslampe sowie Sollwertvorgabe im System der selbsttätigen Leuchtweitenregelung. Zeitkritische Funktionen werden in beiden Systemen durch Subroutinen gesteuert, die durch Unterbrechungszyklen aufgerufen werden. Zusätzlich oder alternativ werden weniger zeitkritische Funktionen und Entscheidungen in beiden Systemen in nach Zeit oder Aufgaben verschachtelter Betriebsweise getroffen. Das Programm des Mikrokontrollers 103 ist demgemäß so gestaltet, daß die Funktionen in beiden Systemen effektiv erfüllt werden.

Entsprechend einem vorteilhaften Ausführungsbeispiel ist als Mikrokontroller 103 ein auf RISC-Basis aufgebauter Mikrokontroller vorgesehen, bei welchem zur Steuerung ein reduzierter Satz von Instruktionen zur Anwendung kommt. In vorteilhafter Ausgestaltung ist dieser Mikrokontroller 103 mit einem Nur-Lesespeicher, einem sogenannten ROM-Speicher, von typischerweise einigen zig kBytes, wie z.B. von 20 kilobytes, einem Speicher mit wahlfreiem Zugriff, einem sogenannten RAM-Speicher, insbesondere von etwa 1 kByte, wie z.B. 640 bytes, und einem elektronisch lösch- und programmierbaren Speicher, einem sogenannten EEPROM-Speicher, insbesondere von etwa 1 kByte, wie z.B. 640 bytes, versehen.

Der Mikrokontroller 103 kann weiterhin mit einem elektrisch löschbaren und wiederbeschreibbaren Speicher, einem EEPROM-Speicher, welcher typischerweise die Größe von einigen zig kilobytes aufweist, versehen sein, um darin den Programmteil zu speichern. Alternativ zu diesem Speichertyp kann der Mikrokontroller 103 mit einem Flash-Speicher versehen sein, bei dem einzelne Speicherbereiche selektiv löschbar und wieder neu beschreibbar sind. Es ist damit eine einfache Möglichkeit gegeben, bei Programmänderungen das neue Programm zu laden und die Funktionsweise des Steuergerätes zu ändern und zu aktualisieren. Wie in den Ausführungsbeispielen dargestellt, ist es vorteilhaft, den Mikrokontroller 103 mit einem Analog-Digital-Wandler 104 auszustatten. Es ist auch besonders zweckmäßig ihn mit zumindest einem Multifunktionstimer zu versehen, was in den Figuren jedoch nicht gesondert dargestellt ist.

Um das Steuergerät gemäß der Erfindung weiterhin zu verbessern, kann im Mikrokontroller 103 neben der Funktions-Software zusätzlich ein Programm vorgesehen sein, mit dessen Hilfe die Diagnosefunktionen für die Werkstatt übernommen bzw. durchgeführt werden.

Die Erfindung ermöglicht in vorteilhafter Weise erhebliche Einsparungen an Aufwand und Kosten und ist daher in der Lage, wesentlich zur Kundenzufriedenheit beizutragen.

## Patentansprüche

1. Steuergerät zum Betrieb und zur Steuerung von Gasentladungslampen die in Scheinwerfer eingebaut sind,
wobei das Steuergerät (10) mit einem Mikrokontroller (103) ausgestattet ist,
dem Mikrokontroller (103), neben den für den Betrieb und die Steuerung im System der Gasentladungslampe (12) erforderlichen Signalen, auch Sensorsignale (115, 116) in einem System für eine selbsttätige Leuchtweitenregelung des Scheinwerfers zugeführt werden,
der Mikrokontroller (103) derart gestaltet ist, daß er diese Signale beider Systeme verschachtelt und/oder gegebenenfalls in Unterbrechungs-Behandlung verarbeitet, und
die Laufzeit des Mikrokontrollers (103) unter mehreren Funktionen aufgeteilt ist, insbesondere Zünden und Betrieb im System der Gasentladungslampe (12) sowie Sollwertvorgabe im System der selbsttätigen Leuchtweitenregelung (14, 24).

2. Steuergerät nach Anspruch 1, **dadurch gekennzeichnet, daß** die selbsttätige Leuchtweitenregelung eine statische Leuchtweitenregelung (14) ist, bei welcher der Sollwert in relativ großen Zeitabständen aktualisiert wird.

3. Steuergerät nach Anspruch 2, **dadurch gekennzeichnet, daß** bei der selbsttätigen statischen Leuchtweitenregelung (14) ein Gleichstrommotor (141) vorgesehen ist.

4. Steuergerät nach Anspruch 1, **dadurch gekennzeichnet, daß** die selbsttätige Leuchtweitenregelung eine dynamische Leuchtweitenregelung (24) ist, bei welcher der Sollwert in relativ kleinen Zeitabständen aktualisiert wird.

5. Steuergerät nach Anspruch 4, **dadurch gekennzeichnet, daß** bei der selbsttätigen dynamischen Leuchtweitenregelung (24) ein Schrittmotor (241) vorgesehen ist.

6. Steuergerät nach Anspruch 5, **dadurch gekennzeichnet, daß** eine Treiberschaltung (242) vorgesehen ist, und daß diese gegebenenfalls im Steuergerät (10) vorgesehen ist.

7. Steuergerät nach Anspruch 1 oder einem der Ansprüche 2 - 6, **dadurch gekennzeichnet, daß** zeitkritische Funktionen in beiden Systemen durch Subroutinen gesteuert werden, die durch Unterbrechungszyklen aufgerufen werden, und/oder daß weniger zeitkritische Funktionen und Entscheidungen in beiden Systemen in nach Zeit oder Aufgaben verschachtelter Betriebsweise getroffen werden.

8. Steuergerät nach einem der vorigen Ansprüche, **dadurch gekennzeichnet, daß** als Mikrokontroller (103) ein auf RISC-Basis aufgebauter Mikrokontroller vorgesehen ist, bei welchem zur Steuerung ein reduzierter Satz von Instruktionen zur Anwendung kommt.

9. Steuergerät nach Anspruch 8, **dadurch gekennzeichnet, daß** der Mikrokontroller (103) mit einem Nur-Lesespeicher (ROM-Speicher), typischerweise von einigen zig kilobytes, einem Speicher mit wahlfreiem Zugriff (RAM-Speicher), insbesondere von etwa 1 kilobyte, und einem elektronisch lösch- und programmierbaren Speicher (EEPROM-Speicher), insbesondere von etwa 1 kilobyte, versehen ist.

10. Steuergerät nach Anspruch 8 oder 9, **dadurch gekennzeichnet, daß** der Mikrokontroller (103) mit einem elektrisch löschbaren und wiederbeschreibbaren Speicher (EEPROM-Speicher) für den Programmteil versehen ist, welcher typischerweise die Größe von einigen zig kilobytes aufweist, oder mit einem Flash-Speicher, bei dem einzelne Speicherbereiche selektiv löschbar und wieder neu beschreibbar sind.

11. Steuergerät nach Anspruch 8, 9 oder 10, **dadurch gekennzeichnet, daß** der Mikrokontroller (103) mit einem Analog-Digital-Wandler (104) und zumindest einem Multifunktionstimer versehen ist.

12. Steuergerät nach einem der vorigen Ansprüche **dadurch gekennzeichnet, daß** ein anwendungsspezifischer integrierter Schaltkreis (ASIC) (105) vorgesehen ist, welcher für beide Systeme adaptiert ist.

13. Steuergerät nach einem der vorigen Ansprüche, **dadurch gekennzeichnet, daß** im Mikrokontroller (103) neben der Funktions-Software zusätzlich ein Programm vorgesehen ist, mit dessen Hilfe die Diagnosefunktionen für die Werkstatt übernommen bzw. durchgeführt werden.

## Claims

1. Control unit for operating and controlling gas discharge lamps which are installed in headlights, in which the control unit (10) is fitted with a microcontroller (103), the microcontroller (103), in addition to the signals required for operation and control in the system of the gas discharge lamp (12), is also fed sensor signals (115, 116) in a system for automatic range adjustment of the headlight, the microcontroller (103) is configured such that it interleaves these signals of the two systems and/or, if appropriate, processes them using interrupt handling, and the running time of the microcontroller (103) is split up between a plurality of functions, in particular starting and operation in the system of the gas discharge lamp (12) and set point stipulation in the system of the automatic headlight range adjustment (14, 24).

2. Control unit according to Claim 1,
**characterized in that** the automatic headlight range adjustment system is a static headlight range adjustment system (14) in which the set point is updated at relatively long time intervals.

3. Control unit according to Claim 2,
**characterized in that** a DC motor (141) is provided for the automatic static headlight range adjustment system (14).

4. Control unit according to Claim 1,
**characterized in that** the automatic headlight range adjustment system is a dynamic headlight range adjustment system (24) in which the set point is updated at relatively short time intervals.

5. Control unit according to Claim 4,
**characterized in that** a stepping motor (241) is provided for the automatic dynamic headlight range adjustment system (24).

6. Control unit according to Claim 5,
**characterized in that** a driver circuit (242) is provided, and **in that** the latter is provided, if appropriate, in the control unit (10).

7. Control unit according to Claim 1 or one of Claims 2-6, **characterized in that** time-critical functions are controlled in both systems by subroutines which are called by interruption cycles, and/or **in that** less time-critical functions and decisions are taken in both systems in a mode of operation interleaved in terms of time or tasks.

8. Control unit according to one of the preceding claims, **characterized in that** provided as microcontroller (103) is a microcontroller which is designed on a RISC basis and in which a reduced set of instructions is used for control purposes.

9. Control unit according to Claim 8,
**characterized in that** the microcontroller (103) is provided with a read-only memory (ROM), typically of a few tens of kilobytes, a random access memory (RAM), in particular of about 1 kilobyte, and an electrically erasable programmable memory (EEPROM), in particular of about 1 kilobyte.

10. Control unit according to Claim 8 or 9,
**characterized in that** the microcontroller (103) is provided with an electrically erasable programmable memory (EEPROM) for the program part, which typically has the size of a few tens of kilobytes, or with a flash memory in which individual memory areas can be selectively erased and rewritten.

11. Control unit according to Claims 8 or 9 or 10, **characterized in that** the microcontroller (103) is provided with an analogue-to-digital converter (104) and at least one multifunction timer.

12. Control unit according to one of the preceding claims, **characterized in that** an application-specific integrated circuit (ASIC) (105) is provided which is adapted to both systems.

13. Control unit according to one of the preceding claims, **characterized in that** provided in the microcontroller (103) in addition to the function software is a program with the aid of which the diagnostic functions for the workshop can be adopted and/or carried out.

## Revendications

1. Dispositif de réglage pour l'opération et la commande de lampes à décharge de gaz montées dans des projecteurs, dans lequel :
- le dispositif de réglage (10) est constitué par un microcontrôleur (103),
- au microcontrôleur (103) sont adressés, en plus des signaux nécessaires au fonctionnement et à la commande dans le système de la lampe à décharge de gaz (12), des signaux de détecteur (115, 116) dans un système destiné au réglage automatique de la portée de l'éclairage du projecteur,
- le microcontrôleur (103) est constitué de manière que les signaux des deux systèmes sont intercalés et/ou le cas échéant traités avec interruption,
- le temps de transit du microcontrôleur (103) est partagé entre plusieurs fonctions, en particulier l'allumage et le fonctionnement dans le système de la lampe de décharge (12) ainsi que la donnée préalable de la valeur théorique dans le système du réglage automatique de la portée de l'éclairage (14, 24).

2. Dispositif selon la revendication 1,
**caractérisé en ce que**
le réglage automatique de la portée de l'éclairage est un réglage statique (14) dans lequel la valeur théorique est actualisée à des intervalles de temps relativement longs.

3. Dispositif selon la revendication 2,
**caractérisé en ce que**
dans le réglage automatique (14) de la portée de l'éclairage il est prévu un moteur à courant continu (141).

4. Dispositif selon la revendication 1,
**caractérisé en ce que**
le réglage automatique de la portée de l'éclairage est un réglage dynamique (24) dans lequel la valeur théorique est actualisée à des intervalles de temps relativement courts.

5. Dispositif selon la revendication 4,
**caractérisé en ce que**
dans le réglage automatique (24) de la portée de l'éclairage, il est prévu un moteur pas à pas (241).

6. Dispositif selon la revendication 5,
**caractérisé en ce qu'**
il est prévu un circuit d'excitation (242) éventuellement dans le dispositif de réglage (10).

7. Dispositif selon l'une quelconque des revendications 1 à 6,
**caractérisé en ce que**
les fonctions critiques dans le temps dans les deux systèmes sont commandées par le microcontrôleur au moyen de sous-routines qui sont appelées par des cycles d'interruption et/ou de fonctions moins critiques dans le temps et des décisions sont obtenues dans les deux systèmes selon un mode de fonctionnement intercalé en ce qui concerne le temps ou les données

8. Dispositif selon l'une quelconque des revendications précédentes,
**caractérisé en ce que**
le microcontrôleur (103) est du type à base RISC, dans lequel on utilise pour la commande une série réduite d'instructions.

9. Dispositif selon la revendication 8,
**caractérisé en ce que**
le microcontrôleur (103) comprend une mémoire vive de lecture seulement (mémoire ROM) du type à quelques dizaines de kilobytes, une mémoire accessible à volonté (mémoire RAM), en particulier d'environ 1 kilobyte, une mémoire effaçable et programmable électroniquement (mémoire EEPROM) en particulier d'environ 1 kilobyte.

10. Dispositif selon l'une quelconque des revendications 8 ou 9,
**caractérisé en ce que**
le microcontrôleur (103) est équipé pour la partie de programme d'une mémoire effaçable et réécrivable électriquement (mémoire EEPROM) qui typiquement à une grandeur de quelques dizaines de kilobytes, ou d'une mémoire flash, dans laquelle les diverses zones de la mémoire peuvent être sélectivement effacées et à nouveau réécrites.

11. Dispositif selon l'une quelconque des revendications 8, 9 ou 10,
**caractérisé en ce que**
le microcontrôleur (103) est équipé d'un convertisseur analogique-numérique (104) et d'au moins un timer multifonctionnel.

12. Dispositif selon l'une quelconque des revendications précédentes,
**caractérisé en ce qu'**
il est prévu un circuit intégré spécifique d'une application (ASIC), (105), adapté aux deux systèmes.

13. Dispositif selon l'une quelconque des revendications précédentes,
**caractérisé en ce que**
dans le microcontrôleur (103) il est prévu, en plus du programme software de fonction, un programme à l'aide duquel sont assurées et exécutées les fonctions de diagnostic à l'atelier.
